# FASCICULE DE BREVET EUROPEEN

(11) **EP 0 892 453 B1**
(45) Date de publication et mention de la délivrance du brevet: **02.04.2003**
(21) Numéro de dépôt: 98401745.9
(22) Date de dépôt: 09.07.1998
(51) Int. Cl.: H01M 10/40, H01M 2/16

(54) **Procédé de fabrication d'un générateur électrochimique de structure unitaire**
Verfahren zur Herstellung eines elektrochemischen Generators mit einheitlicher Struktur
Process of fabrication of a unified structure secondary electrochemical cell

(30) Priorité: 17.07.1997 FR 9709074
(43) Date de publication de la demande: 20.01.1999
(73) Titulaire: ALCATEL, 75008 Paris (FR)
(72) Inventeur: Olsen, Ib Ingamnn, Cockeysville, Maryland 21030 (US); Boudin, François, 91290 Arpajon (FR); Andrieu, Xavier, 91220 Bretigny sur Orge (FR); Moreau, Laurent, 91400 Orsay (FR)
(74) Mandataire: Korakis-Ménager, Sophie

(56) Documents cités:
- EP-A- 0 511 491
- WO-A-96/20504
- DE-A- 19 650 765
- US-A- 5 437 692

## Description

La présente invention concerne un procédé de fabrication d'un générateur électrochimique à électrolyte organique dont la structure est unitaire.

Un générateur à structure unitaire est un générateur dont les éléments qui le constituent, en particulier les électrodes et le séparateur, sont solidaires si bien que chaque élément accompagne toutes les variations dimensionnelles du générateur lors de son fonctionnement.

Quelques documents de l'art antérieur proposent un procédé de fabrication d'un générateur de structure unitaire qui utilise un additif plastifiant utile lors de l'assemblage des éléments du générateur.

US-5 456 000 décrit un procédé de fabrication d'un générateur de structure unitaire qui consiste à faire adhérer par laminage les éléments du générateur, à savoir les électrodes, le séparateur et éventuellement les collecteurs. Chaque élément du générateur se présente sous la forme d'un film polymérique, de préférence à base de copolymère de fluorure de vinylidène et d'hexafluoropropylène PVDF-HFP. Le séparateur, et éventuellement les autres éléments de générateur, contiennent un plastifiant qui permet de préserver la microstructure des éléments pendant le laminage. Le plastifiant est ensuite éliminé par extraction avec un solvant sélectif.

Selon US-5 540 741, une première électrode est constituée d'un support conducteur sur lequel on dépose une pâte contenant un polymère, un additif plastifiant et un matériau électrochimiquement actif. Le polymère est, de préférence, un copolymère de fluorure de vinylidène et d'hexafluoropropylène (PVDF-HFP). Après séchage, l'électrode est recouverte d'un film qui constitue le séparateur. L'ensemble électrode-séparateur est ensuite recouvert d'une deuxième électrode puis chauffé sous pression. Le plastifiant est ensuite extrait à l'aide d'un solvant inerte vis-à-vis du polymère.

US-5 552 239 décrit le même procédé que précédemment en proposant d'autres polymères, comme le polychlorure de vinyle, les copolymères acrylonitrile/butadiène et les polymères polyacrylonitrile, pour constituer le séparateur.

Les trois procédés décrits précédemment permettent avantageusement d'assembler le générateur à l'air libre. Cependant la phase d'extraction du plastifiant est longue et difficile.

US-5,437,692 décrit un procédé de fabrication d'un générateur unitaire rechargeable au lithium dans lequel les électrodes et l'électrolyte solide ou le séparateur imprégné sont réunis par collage. Le procédé comprend l'enduction d'une colle sur chacune des faces de l'électrolyte, ou du séparateur imprégné, et la mise en contact de chaque face portant la colle avec l'une des électrodes.

La présente invention a pour but un procédé de fabrication d'un générateur électrochimique à électrolyte organique de structure unitaire
- qui comporte un nombre limité d'étapes simples,
- qui n'utilise pas une étape d'extraction longue et complexe, et
- qui permet l'obtention d'un générateur dont les variations dimensionnelles sont minimisées.

L'objet de la présente invention est en effet un procédé de fabrication d'un générateur électrochimique à électrolyte organique de structure unitaire comportant au moins un couple électrochimique composé d'une première électrode et d'une deuxième électrode, chaque électrode comprenant au moins une couche contenant un matériau électrochimiquement actif, d'un séparateur et d'une colle, procédé caractérisé en ce qu'il comporte les étapes suivantes :
- on réalise ladite première électrode comprenant une première couche fabriquée en déposant sur un support conducteur une pâte constituée d'un matériau électrochimiquement actif, d'un polymère et d'un solvant, ladite première couche étant recouverte d'un film de solution d'un polymère qui est séché pour former une deuxième couche, ladite deuxième couche étant poreuse et comportant une face libre,
- on réalise ladite deuxième électrode qui comprend une couche fabriquée en déposant sur un support conducteur une pâte constituée d'un matériau électrochimiquement actif, d'un polymère et d'un solvant, ladite couche étant poreuse et comportant une face libre,
- on réalise ladite colle comprenant une solution d'un polymère dans un solvant,
- on enduit ladite colle sur la face libre de la couche poreuse de l'une des deux électrodes, puis
- on met en contact ladite face libre recouverte de colle avec la face libre de la couche poreuse de l'autre électrode pour former ledit couple électrochimique,
- on sèche ledit couple pour transformer ladite colle en un film poreux,
- on imprègne d'électrolyte ledit couple.

La première électrode comprenant la superposition de deux couches remplit simultanément
- la fonction de siège de la réaction électrochimique, qui met en jeu le matériau électrochimiquement actif contenu dans la première couche,
- la fonction de séparateur électrique, pour éviter tout contact entre le matériau actif de la première électrode et celui de la deuxième électrode, qui est assurée par la deuxième couche constituée d'un matériau polymère choisi pour ses propriétés d'isolant électrique, et
- la fonction de réservoir d'électrolyte assurée par la deuxième couche poreuse constituée d'un matériau polymère présentant une affinité physicochimique avec l'électrolyte.

Dans le cadre de la présente invention, la deuxième couche de la première électrode est avantageusement dotée d'une structure microporeuse gélifiée, qui permet d'optimiser à la fois la fonction de séparateur électrique et de réservoir d'électrolyte.

Selon une première variante du procédé de l'invention, la colle est une solution contenant
- un polymère de même formule chimique que le polymère constituant la deuxième couche poreuse de la première électrode,
- un solvant dans lequel le polymère se dissout facilement à la température de préparation de la colle, et
- un non-solvant qui est miscible avec ledit solvant, qui ne dissout pas ou dissout très peu le polymère à la température de préparation de la colle, et dont la proportion est insuffisante pour provoquer la précipitation du polymère.

Le solvant est volatil et doit avoir une température d'ébullition inférieure à celle du non-solvant également volatil. Avantageusement, le solvant a une température d'ébullition comprise entre 40 et 80°C et le non-solvant a une température d'ébullition supérieure à 100°C.

La masse du solvant représente 75 à 90 % de la masse totale du solvant et du non-solvant et la masse du polymère représente 10 à 20 % de la masse de la solution de colle.

Le polymère est dissous dans le solvant puis on ajoute à ce mélange le non-solvant. La colle ainsi obtenue est portée à une température à laquelle le mélange polymère/solvant/non-solvant est stable et homogène pendant l'enduction.

Le polymère est avantageusement choisi parmi le polyfluorure de vinylidène (PVDF), le polychlorure de vinyle (PVC), le polyméthacrylate de méthyle, le triacétate de cellulose (CA), une polysulfone, un polyéther, une polyoléfine comme le polyéthylène (PE), l'oxyde de polyéthylène (PEO), le polypropylène (PP), et leurs copolymères.

Le polymère peut aussi être un alliage du polyfluorure de vinylidène (PVDF) avec un polymère choisi parmi une polysulfone, le polyméthacrylate de méthyle, la polyvinylpyrrolidone, et les copolymères de polyfluorure de vinylidène et de polytétrafluoréthylène (PTFE), de polyfluorure de vinylidène et d'hexafluorure de propylène, de polyacétate de vinyle (PVAC) et d'alcool polyvinylique (APV).

Selon un autre mode de mise en oeuvre de l'invention, le polymère est un alliage constitué d'un polymère élastomère et d'un polymère qui gonfle avec l'électrolyte organique.

Le polymère élastomère a pour rôle d'améliorer les propriétés mécaniques de la deuxième couche en limitant les variations dimensionnelles.

Le polymère élastomère peut être choisi parmi les polyuréthanes, un copolymère acrylonitrile/butadiène, un copolymère styrène/butadiène/styrène, un copolymère styrène/isoprène/styrène, les polyesters, les polyéthers blocs amides.

Le polymère qui gonfle avec l'électrolyte organique doit avoir une certaine affinité avec l'électrolyte sans toutefois se dissoudre dans l'électrolyte à des températures comprises entre 50 et 80°C. Ledit polymère peut être choisi parmi le polyfluorure de vinylidène et ses copolymères, le polyacrylonitrile, le polyméthacrylate de méthyle, le polyvinylformal, le polyméthacrylate de butyle, le polychlorure de vinyle.

Selon la première variante du procédé de l'invention, on choisit de préférence comme polymère, le polyfluorure de vinylidène. Dans ce cas, le solvant est choisi parmi l'acétone et le tétrahydrofuranne. Le non-solvant est choisi parmi le butanol, le propanol et l'éthylène glycol.

L'homme du métier peut déterminer quel solvant et quel non-solvant sont les plus appropriés pour préparer la colle de l'invention, en fonction du polymère choisi.

Il consultera, à ce titre, les données physicochimiques de la littérature concernant le polymère choisi afin de déterminer quels sont les solvants qui dissolvent le polymère facilement à la température de préparation de la colle et quels sont les non-solvants, miscibles avec ledit solvant, qui ne dissolvent pas ou dissolvent très peu le polymère à la température de préparation de la colle.

Selon la première variante du procédé de l'invention, le couple électrochimique formé est laminé, séché pendant 10 minutes à une température d'environ 20°C, puis séché sous vide pendant environ 12 heures.

Selon une deuxième variante du procédé selon l'invention, la colle est une pâte constituée du matériau électrochimiquement actif de la couche poreuse de la deuxième électrode, d'un polymère et d'un solvant qui dissout le polymère.

Le polymère est de préférence choisi parmi le polytétrafluoréthylène, la carboxyméthylcellulose, l'hydroxypropylméthylcellulose, l'hydroxyéthylcellulose, l'hydroxypropylcellulose, le polyfluorure de vinylidène et ses copolymères, le polyacrylonitrile, l'acide polyacrylique, le polyacrylamide, ainsi que leurs mélanges.

Le solvant est choisi parmi l'eau et la N-méthyl-pyrrolidone.

La couche poreuse de la deuxième électrode et la première couche de la première électrode sont fabriquées selon des méthodes usuelles, comme le dépôt d'une pâte sur un support conducteur.

On choisira comme support conducteur un métal déployé, une grille, un tissu, un feuillard ou une mousse métallique par exemple à base de cuivre ou d'aluminium.

La pâte utilisée pour fabriquer la couche poreuse de la deuxième électrode ou la première couche de la première électrode a avantageusement la même composition que la colle selon l'invention, constituée du matériau électrochimiquement actif de la couche poreuse de la deuxième électrode, du polymère et du solvant qui dissout le polymère.

Selon la deuxième variante du procédé de l'invention, le couple électrochimique formé est laminé puis séché pendant 10 minutes à une température d'environ 80°C.

De préférence, l'épaisseur de la deuxième couche poreuse de la première électrode, utilisée pour la mise en oeuvre de la première ou de la deuxième variante du procédé de l'invention, est comprise entre 15 et 100 µm.

En outre, la colle une fois séchée est un film poreux d'une épaisseur de préférence comprise entre 5 et 20 µm.

L'épaisseur de la première couche de la première électrode et l'épaisseur de la couche poreuse de la deuxième électrode sont avantageusement comprises entre 100 et 160µm.

La porosité des couches poreuses de chacune des électrodes est avantageusement comprise entre 30 et 95 %, de préférence, entre 35 et 40 %.

L'électrode comprenant la superposition de deux couches utilisée pour la mise en oeuvre du procédé selon l'invention est fabriquée en réalisant d'abord la première couche puis en recouvrant ladite première couche d'un film de solution du polymère choisi pour constituer la deuxième couche. Ledit film est ensuite séché pour éliminer le ou les solvants constituant la solution de polymère.

Un premier mode de réalisation de l'électrode comprenant deux couches est l'inversion de phase par immersion.

Selon ce premier mode de réalisation, ladite solution est constituée du polymère dissout dans un solvant. On recouvre ensuite la première couche d'un film de cette solution et ledit film est mis en contact avec un non-solvant miscible avec ledit solvant.

Un deuxième mode de réalisation de l'électrode comprenant deux couches est l'inversion de phase par évaporation.

Selon ce deuxième mode de réalisation, ladite solution est constituée du polymère dissout dans un solvant volatil, auxquels on ajoute un non-solvant moins volatil, miscible avec ledit solvant, dans une proportion insuffisante pour provoquer la précipitation du polymère.

Dans le cadre de la présente invention, il est tout à fait avantageux d'élaborer la deuxième couche de l'électrode comportant deux couches, à partir de la solution utilisée comme colle selon la première variante du procédé de l'invention décrit précédemment.

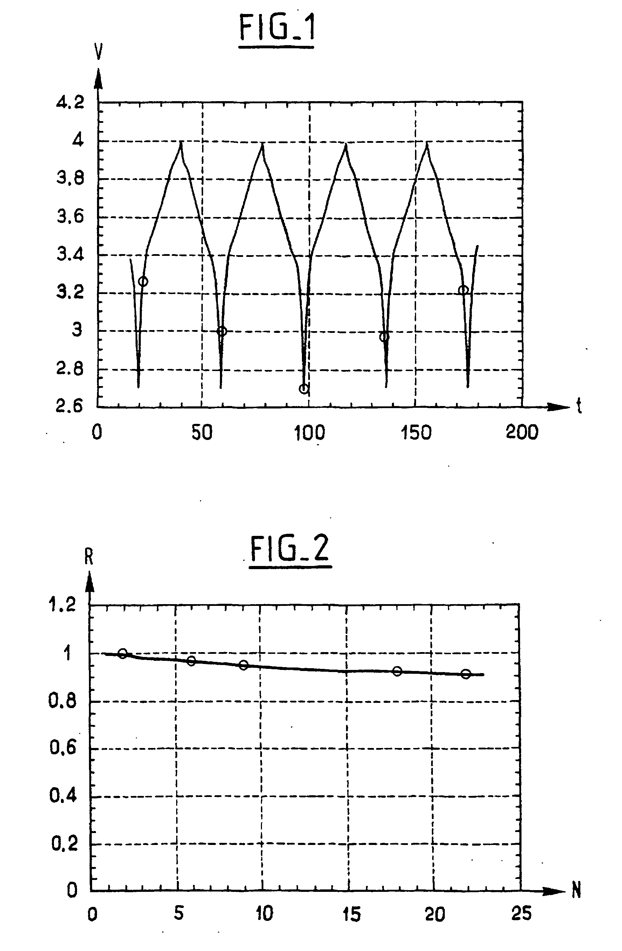

D'autres caractéristiques et avantages de la présente invention apparaîtront à la lecture des exemples suivants donnés à titre illustratif mais non limitatif, et en référence aux figures 1 et 2.
. La figure 1 représente l'évolution de la tension du générateur selon l'invention au cours d'un cyclage; la tension du générateur V donnée en ordonnée, est en volts et le temps donné en abscisse, en heures.
. La figure 2 montre l'évolution du rapport de la capacité de décharge du générateur au N^{ième} cycle par rapport à la capacité de décharge du générateur selon l'invention au premier cycle au cours d'un cyclage. On donne ce rapport R sans unité en ordonnée et on donne en abscisse le nombre de cycles .

### EXEMPLE 1 :

### Préparation d'une première électrode comportant une couche contenant du graphite comme matériau électrochimiquement actif.

On prépare une pâte constituée de 12% de poudre de graphite, de 2% d'acide polyacrylique et de 86% d'eau (les pourcentages sont en masse).

La pâte est obtenue en mélangeant à température ambiante, sous agitation, l'acide polyacrylique dans l'eau pendant une demi-heure environ. Lorsque la solution est translucide, on incorpore la poudre de graphite et on agite jusqu'à ce que le mélange soit homogène.

On enduit ensuite un déployé de cuivre avec cette pâte, puis on place l'électrode à l'étuve à 80°C pendant 2 heures.

L'électrode de graphite ainsi obtenue comporte une couche poreuse, constituée de graphite et d'acide polyacrylique, d'épaisseur 140µm et de porosité 40%.

### Préparation d'une deuxième électrode comprenant la superposition de deux couches.

Une électrode comprenant une première couche contenant, comme matière électrochimiquement active du LiNiO₂ est enduite d'une solution constituée de 75% d'acétone, 12,5% de butanol et 12,5% de polyfluorure de vinylidène (les pourcentages sont en masse).

Cette solution est obtenue en dissolvant le polyfluorure de vinylidène dans l'acétone puis en ajoutant le butanol.

L'électrode de LiNiO₂ est ensuite séchée à une température de l'ordre de 20°C pendant 12 heures.

L'électrode comprend la superposition d'une première couche contenant du LiNiO₂ et d'une deuxième couche constituée de polyfluorure de vinylidène. Ladite deuxième couche, qui joue le rôle de séparateur, a une épaisseur de 50µm et une porosité de 70%.

### Collage

L'électrode comprenant une première couche de LiNiO₂ et une deuxième couche de polyfluorure de vinylidène est enduite avec la même solution que celle utilisée pour fabriquer ladite deuxième couche, ladite solution jouant le rôle de colle à ce stade du procédé.

L'électrode enduite de colle est immédiatement assemblée à l'électrode de graphite fabriquée précédemment.

Le couple électrochimique obtenu peut éventuellement être laminé ou simplement placé entre deux plaques métalliques sous pression, pour uniformiser l'épaisseur du film de colle.

Ledit couple électrochimique est séché à température ambiante pendant 10 minutes, puis sous vide pendant 12 heures afin d'éliminer le solvant et le non-solvant, avant d'être imprégné d'un électrolyte composé d'une solution de LiPF₆ à la concentration 1M dans un mélange carbonate de propylène/carbonate d'éthylène/carbonate de diméthyle dans les proportions 1/1/3.

Le couple électrochimique ainsi imprégné est monté en cellule bouton puis cyclé à un courant de lc/20 (où lc est le courant théorique nécessaire pour décharger la capacité nominale d'un accumulateur en 1 heure) en charge et en décharge, à une température de 60°C.

La figure 1 et la figure 2 montrent respectivement l'évolution, au cours de ce cyclage, de la tension et du rapport capacité de décharge du générateur au N^{ième} cycle / capacité de décharge du générateur au premier cycle.

### EXEMPLE 2 :

La préparation d'une électrode comportant une couche et d'une électrode comprenant la superposition de deux couches est réalisée dans les mêmes conditions que dans l'exemple 1.

### Collage

L'électrode comprenant une couche constituée de graphite et d'acide polyacrylique est enduite avec la même pâte que celle utilisée pour fabriquer ladite couche, ladite pâte jouant le rôle de colle à ce stade du procédé.

L'électrode de graphite enduite de colle est immédiatement assemblée à l'électrode fabriquée à l'exemple 1, comprenant une première couche de LiNiO₂ et une deuxième couche de polyfluorure de vinylidène.

Le couple électrochimique obtenu peut éventuellement être laminé ou simplement placé entre deux plaques métalliques sous pression, pour uniformiser l'épaisseur du film de colle.

Le couple électrochimique est ensuite séché pendant 12 heures dans une étuve à 80°C pour éliminer le solvant.

## Revendications

1. Procédé de fabrication d'un générateur électrochimique à électrolyte organique de structure unitaire comportant au moins un couple électrochimique composé d'une première électrode et d'une deuxième électrode, chaque électrode comprenant au moins une couche contenant un matériau électrochimiquement actif, d'un séparateur et d'une colle, procédé **caractérisé en ce qu'**il comporte les étapes suivantes :
- on réalise ladite première électrode comprenant une première couche fabriquée en déposant sur un support conducteur une pâte constituée d'un matériau électrochimiquement actif, d'un polymère et d'un solvant, ladite première couche étant recouverte d'un film de solution d'un polymère qui est séché pour former une deuxième couche, ladite deuxième couche étant poreuse et comportant une face libre,
- on réalise ladite deuxième électrode qui comprend une couche fabriquée en déposant sur un support conducteur une pâte constituée d'un matériau électrochimiquement actif, d'un polymère et d'un solvant, ladite couche étant poreuse et comportant une face libre,
- on réalise ladite colle comprenant une solution d'un polymère dans un solvant,
- on enduit ladite colle sur la face libre de la couche poreuse de l'une des deux électrodes, puis
- on met en contact ladite face libre recouverte de colle avec la face libre de la couche poreuse de l'autre électrode pour former ledit couple électrochimique,
- on sèche ledit couple pour transformer ladite colle en un film poreux,
- on imprègne d'électrolyte ledit couple.

2. Procédé selon la revendication 1, **caractérisé en ce que** la colle est une solution contenant
- un polymère de même formule chimique que le polymère constituant la deuxième couche poreuse de la première électrode,
- un solvant dons lequel le polymère se dissout facilement à la température de préparation de la colle, et
- un non-solvant qui est miscible avec ledit solvant, qui ne dissout pas ou dissout très peu le polymère à la température de préparation de la colle, et dont la proportion est insuffisante pour provoquer la précipitation du polymère.

3. Procédé selon la revendication 2, **caractérisé en ce que** le solvant a une température d'ébullition comprise entre 40 et 80°C et le non-solvant a une température d'ébullition supérieure à 100°C.

4. Procédé selon l'une des revendications 2 et 3, **caractérisé en ce que** la masse du solvant représente 75 à 90% de la masse totale du solvant et du non-solvant.

5. Procédé selon l'une des revendications 2 à 4, **caractérisé en ce que** la masse du polymère représente 10 à 20% de la masse de la solution de colle.

6. Procédé selon l'une des revendications 2 à 5, **caractérisé en ce que** la colle est portée à une température à laquelle le mélange polymère/solvant/non-solvant est stable et homogène pendant l'enduction.

7. Procédé selon l'une des revendications 2 à 6, **caractérisé en ce que** le polymère est choisi parmi le polyfluorure de vinylidène (PVDF), le polychlorure de vinyle (PVC), le polyméthacrylate de méthyle, le triacétate de cellulose (CA), une polysulfone, un polyéther, une polyoléfine comme le polyéthylène (PE), l'oxyde de polyéthylène (PEO), le polypropylène (PP), et leurs copolymères.

8. Procédé selon l'une des revendications 2 à 6, **caractérisé en ce que** le polymère est un alliage du polyfluorure de vinylidène (PVDF) avec un polymère choisi parmi une polysulfone, le polyméthacrylate de méthyle, la polyvinylpyrrolidone, et les copolymères de polyfluorure de vinylidène et de polytétrafluoréthylène (PTFE), de polyfluorure de vinylidène et d'hexafluorure de propylène, de polyacétate de vinyle (PVAC) et d'alcool polyvinylique (APV).

9. Procédé selon l'une des revendications 2 à 6, **caractérisé en ce que** le polymère est un alliage constitué d'un polymère choisi parmi les polyuréthanes, un copolymère acrylonitrile/butadiène, un copolymère styrène/butadiène/styrène, un copolymère styrène/isoprène/styrène, les polyesters, les polyéthers blocs amides et d'un polymère choisi parmi le polyfluorure de vinylidène et ses copolymères, le polyacrylonitrile, le polyméthacrylate de méthyle, le polyvinylformal, le polyméthacrylate de butyle, le polychlorure de vinyle.

10. Procédé selon la revendication 7, **caractérisé en ce que** le polymère est le polyfluorure de vinylidène.

11. Procédé selon la revendication 10, **caractérisé en ce que** le solvant est choisi parmi l'acétone et le tétrahydrofuranne.

12. Procédé selon l'une des revendications 10 et 11, **caractérisé en ce que** le non-solvant est choisi parmi le butanol, le propanol et l'éthylène glycol.

13. Procédé selon l'une des revendications 2 à 12, **caractérisé en ce que** le couple électrochimique formé est laminé, séché pendant 10 minutes à une température d'environ 20°C, puis séché sous vide pendant environ 12 heures.

14. Procédé selon la revendication 1, **caractérisé en ce que** la colle est une pâte constituée du matériau électrochimiquement actif de la couche poreuse de la deuxième électrode, d'un polymère et d'un solvant qui dissout le polymère.

15. Procédé selon la revendication 14, **caractérisé en ce que** le polymère est choisi parmi le polytétrafluoréthylène, la carboxyméthylcellulose, l'hydroxypropylméthylcellulose, l'hydroxyéthylcellulose, l'hydroxypropylcellulose, le polyfluorure de vinylidène et ses copolymères, le polyacrylonitrile, l'acide polyacrylique, le polyacrylamide, ainsi que leurs mélanges.

16. Procédé selon l'une des revendications 14 et 15, **caractérisé en ce que** le solvant est choisi parmi l'eau et la N-méthyl-pyrrolidone.

17. Procédé selon l'une des revendications 14 à 16, **caractérisé en ce que** le couple électrochimique formé est laminé puis séché pendant 10 minutes à une température d'environ 80°C.

18. Procédé selon l'une des revendications précédentes, **caractérisé en ce que** l'épaisseur de la deuxième couche poreuse de la première électrode est comprise entre 15 et 100µm.

19. Procédé selon l'une des revendications précédentes, **caractérisé en ce que** la colle une fois séchée est un film poreux d'une épaisseur comprise entre 5 et 20µm.

20. Procédé selon l'une des revendications précédentes, **caractérisé en ce que** l'épaisseur de la première couche de la première électrode et l'épaisseur de la couche poreuse de la deuxième électrode sont comprises entre 100 et 160µm.

21. Procédé selon l'une des revendications précédentes, **caractérisé en ce que** la porosité des couches poreuses de chacune des électrodes est comprise entre 35 et 40%.

## Claims

1. A process for the production of an organic electrolyte electric cell with a unitary structure comprising at least one pair of electrodes comprising first and second electrodes each comprising at least one layer containing an electrochemically active material, a separator and an adhesive, **characterized in that** it includes the following steps:
- said first electrode is made and includes a first layer made by depositing on a conductive support a paste consisting of an electrochemically active material, a polymer and a solvent, said first layer being coated with a film of a solution of a polymer dried to form a second layer, said second layer being porous and having a free face,
- said second electrode is made and includes a layer made by depositing on a conductive support a paste consisting of an electrochemically active material, a polymer and a solvent, said layer being porous and having a free face,
- said adhesive is made and comprises a solution of a polymer in a solvent,
- said adhesive is coated onto the free face of the porous layer of one of the two electrodes, and then
- said free face coated with adhesive is brought into contact with the free face of the porous layer of the other electrode to form said pair of electrodes,
- said pair of electrodes is dried to convert said adhesive into a porous film,
- said pair of electrodes is impregnated with electrolyte.

2. A process according to claim 1 **characterized in that** the adhesive is a solution containing:
- a polymer with the same chemical formula as the polymer constituting the second porous layer of the first electrode;
- a solvent in which the polymer readily dissolves at the adhesive preparation temperature; and
- a non-solvent which is miscible with said solvent, which does not or only slightly dissolves the polymer at the adhesive preparation temperature and the proportion of which is insufficient to cause precipitation of the polymer.

3. A process according to claim 2 **characterized in that** the solvent has a boiling point in the range 40°C to 80°C and the non-solvent has a boiling point of more than 100°C.

4. A process according to either claim 2 or claim 3 **characterized in that** the mass of the solvent represents 75% to 90% of the total mass of the solvent and the non-solvent.

5. A process according to any of claims 2 to 4 **characterized in that** the mass of the polymer represents 10% to 20% of the mass of the adhesive solution.

6. A process according to any of claims 2 to 5 **characterized in that** the adhesive is heated to a temperature at which the polymer/solvent/non-solvent mixture is stable and homogeneous during coating.

7. A process according to any of claims 2 to 6 **characterized in that** the polymer is selected from polyvinylidene fluoride (PVDF), polyvinyl chloride (PVC), polymethylmethacrylate, cellulose triacetate (CA), a polysulphone, a polyether, a polyolefin such as polyethylene (PE), polyethylene oxide (PEO), polypropylene (PP) and copolymers thereof.

8. A process according to any of claims 2 to 6 **characterized in that** the polymer is an alloy of polyvinylidene fluoride (PVDF) with a polymer selected from a polysulphone, polymethylmethacrylate, polyvinylpyrrolidone and copolymers of polyvinylidene fluoride and polytetrafluoroethylene (PTFE), polyvinylidene fluoride and propylene hexafluoride and polyvinyl acetate (PVAC) and polyvinyl alcohol (PVA).

9. A process according to any of claims 2 to 6 **characterized in that** the polymer is an alloy constituted by a polymer selected from polyurethanes, an acrylonitrile-butadiene copolymer, a styrene-butadiene-styrene copolymer, a styrene-isoprene-styrene copolymer, polyesters, amide block polyethers and a polymer selected from polyvinylidene fluoride and its copolymers, polyacrylonitrile, polymethylmethacrylate, polyvinylformal, polybutylmethacrylate and polyvinyl chloride.

10. A process according to claim 7 **characterized in that** the polymer is polyvinylidene fluoride.

11. A process according to claim 10 **characterized in that** the solvent is selected from acetone and tetrahydrofuran.

12. A process according to either claim 10 or claim 11 **characterized in that** the non-solvent is selected from butanol, propanol and ethylene glycol.

13. A process according to any of claims 2 to 12 **characterized in that** the pair of electrodes formed is rolled, dried for 10 minutes at a temperature of about 20°C and then vacuum dried for about 12 hours.

14. A process according to claim 1 **characterized in that** the adhesive is a paste constituted by the electrochemically active material of the porous layer of the second electrode, a polymer and a solvent which dissolves the polymer.

15. A process according to claim 14 **characterized in that** the polymer is selected from polytetrafluoroethylene, carboxymethylcellulose, hydroxypropylmethylcellulose, hydroxyethylcellulose, hydroxypropylcellulose, polyvinylidene fluoride and its copolymers, polyacrylonitrile, polyacrylic acid, polyacrylamide and mixtures thereof.

16. A process according to either claim 14 or claim 15 **characterized in that** the solvent is selected from water and N-methylpyrrolidone.

17. A process according to any of claims 14 to 16 **characterized in that** the pair of electrodes formed is rolled then dried for 10 minutes at a temperature of about 80°C.

18. A process according to any of the preceding claims **characterized in that** the thickness of the porous second layer of the first electrode is in the range 15 µm to 100µm.

19. A process according to any of the preceding claims **characterized in that**, when dry, the adhesive is a porous film with a thickness in the range 5 µm to 20 µm.

20. A process according to any of the preceding claims **characterized in that** the thickness of the first layer of the first electrode and the thickness of the porous layer of the second electrode are in the range 100µm to 160 µm.

21. A process according to any of the preceding claims **characterized in that** the porosity of the porous layers in each of the electrodes is in the range 35% to 40%.

## Patentansprüche

1. Verfahren zur Herstellung eines elektrochemischen Generators mit organischem Elektrolyten mit einheitlicher Struktur, der wenigstens ein elektrochemisches Paar umfasst, das aus einer ersten Elektrode und einer zweiten Elektrode, wobei jede Elektrode wenigstens eine Schicht umfasst, die ein elektrochemisch aktives Material enthält, einem Separator und einem Klebstoff zusammengesetzt ist, welches Verfahren **dadurch gekennzeichnet ist, dass** es die folgenden Schritte umfasst:
- man stellt die erste Elektrode her, die eine erste Schicht umfasst, welche hergestellt wird, indem auf einen leitfähigen Träger eine aus einem elektrochemisch aktiven Material, einem Polymer und einem Lösungsmittel gebildete Paste abgeschieden wird, wobei die erste Schicht von einem Lösungsfilm eines Polymers überzogen wird. der getrocknet wird um eine zweite Schicht zu formen, wobei die zweite Schicht porös ist und eine freie Seite aufweist,
- man stellt die zweite Elektrode her, die eine Schicht umfasst, welche hergestellt wird, indem auf einen leitfähigen Träger eine aus einem elektrochemisch aktiven Material, einem Polymer und einem Lösungsmittel gebildete Paste abgeschieden wird, wobei die Schicht porös ist und eine freie Seite aufweist,
- man stellt den Klebstoff her, welcher eine Lösung eines Polymers in einem Lösungsmittel umfasst,
- man bringt den Klebstoff auf die freie Seite der porösen Schicht einer der beiden Elektroden auf. dann
- man bringt die mit Klebstoff überzogene freie Seite mit der freien Seite der porösen Schicht der anderen Elektrode in Kontakt um das elektrochemische Paar zu formen,
- man trocknet das Paar um den Klebstoff in einen porösen Film umzuwandeln,
- man imprägniert den Elektrolyten des Paars.

2. Verfahren nach Anspruch 1, **dadurch gekennzeichnet, dass** der Klebstoff eine Lösung ist, welche enthält
- ein Polymer der gleichen chemischen Formel wie das Polymer, welches die poröse, zweite Schicht der ersten Elektrode bildet.
- ein Lösungsmittel, in welchem sich das Polymer bei der Herstellungstemperatur des Klebstoffs leicht löst, und
- ein Nicht-Lösungsmittel, das mit dem Lösungsmittel mischbar ist, welches das Polymer bei der Herstellungstemperatur des Klebstoffs nicht oder nur sehr wenig löst, und dessen Anteil nicht ausreicht, um das Ausfällen des Polymers zu bewirken.

3. Verfahren nach Anspruch 2, **dadurch gekennzeichnet, dass** das Lösungsmittel eine Siedetemperatur hat, die zwischen 40 und 80°C liegt, und dass das Nicht-Lösungsmittel eine Siedetemperatur oberhalb von 100°C hat.

4. Verfahren nach einem der Ansprüche 2 und 3, **dadurch gekennzeichnet, dass** die Masse des Lösungsmittels 75 bis 90% der Gesamtmasse des Lösungsmittels und des Nicht-Lösungsmittels darstellt.

5. Verfahren nach einem der Ansprüche 2 bis 4, **dadurch gekennzeichnet, dass** die Masse des Polymers 10 bis 20% der Masse der Lösung des Klebstoffs darstellt.

6. Verfahren nach einem der Ansprüche 2 bis 5. **dadurch gekennzeichnet, dass** der Klebstoff auf eine Temperatur gebracht wird. bei welcher die Mischung Polymer/Lösungsmittel/Nicht-Lösungsmittel während des Auftrags stabil und homogen ist.

7. Verfahren nach einem der Ansprüche 2 bis 6. **dadurch gekennzeichnet, dass** das Polymer aus Polyvinylidenfluorid (PVDF), Polyvinylchlorid (PVC). Polymethylmetacrylat, Cellulosetriacetat (CA), einem Polysulfon, einem Polyether. einem Polyolefin wie Polyethylen (PE), Polyethylenoxid (PEO). Polypropylen (PP) und deren Kopolymeren gewählt wird.

8. Verfahren nach einem der Ansprüche 2 bis 6, **dadurch gekennzeichnet, dass** das Polymer eine Legierung von Polyvinylidenfluorid (PVDF) mit einem Polymer, gewählt aus einem Polysulfon. Polymethylmetacrylat, Polyvinylpyrrolidon, und den Kopolymeren von Polyvinylidenfluorid und Polytetrafluorethylen (PTFE), Polyvinylidenfluorid und Propylenhexafluorid. Polyvinylacetat (PVAC) und Polyvinylalkohol (APV), ist.

9. Verfahren nach einem der Ansprüche 2 bis 6, **dadurch gekennzeichnet, dass** das Polymer eine Legierung ist. welche gebildet ist aus einem Polymer, gewählt aus Polyurethanen, einem Kopolymer Acrylonitril/Butadien, einem Kopolymer Styren/Butadien/Styren, einem Kopolymer Styren/Isopren/Styren, Polyestern, Blockamidpolyethern und einem Polymer, gewählt aus Polyvinylidenfluorid und seinen Kopolymeren, Polyacrylonitril. Polymethylmetacrylat, Polyvinylformal, Polybutylmetacrylat, Polyvinylchlorid.

10. Verfahren nach Anspruch 7, **dadurch gekennzeichnet, dass** das Polymer Polyvinylidenfluorid ist.

11. Verfahren nach Anspruch 10, **dadurch gekennzeichnet, dass** das Lösungsmittel aus Aceton und Tetrahydrofuran gewählt ist.

12. Verfahren nach einem der Ansprüche 10 und 11, **dadurch gekennzeichnet, dass** das Nicht-Lösungsmittel aus Butanol, Propanol und Glycolethylen gewählt ist.

13. Verfahren nach einem der Ansprüche 2 bis 12, **dadurch gekennzeichnet, dass** das geformte elektrochemische Paar beschichtet, 10 Minuten lang bei einer Temperatur von ungefähr 20°C getrocknet, anschließend ungefähr 12 Stunden lang unter Vakuum getrocknet wird.

14. Verfahren nach Anspruch 1, **dadurch gekennzeichnet, dass** der Klebstoff eine Paste ist, die aus einem elektrochemisch aktiven Material der porösen Schicht der zweiten Elektrode, einem Polymer und einem das Polymer lösenden Lösungsmittel besteht.

15. Verfahren nach Anspruch 14, **dadurch gekennzeichnet, dass** das Polymer aus Polytetrafluorethylen, Carboxymethylcellulose, Hydroxypropylmethylcellulose, Hydroxyethylcellulose, Hydroxypropylcellulose, Polyvinylidenfluorid und seinen Kopolymeren, Polyacrylonitril, Polyacrylsäure, Polyacrylamid, sowie deren Mischungen gewählt ist.

16. Verfahren nach einem der Ansprüche 14 und 15, **dadurch gekennzeichnet, dass** das Lösungsmittel aus Wasser und N-Methylpyrrolidon gewählt ist.

17. Verfahren nach einem der Ansprüche 14 bis 16, **dadurch gekennzeichnet, dass** das geformte elektrochemische Paar beschichtet, dann 10 Minuten lang bei einer Temperatur von ungefähr 80°C getrocknet wird.

18. Verfahren nach einem der vorhergehenden Ansprüche, **dadurch gekennzeichnet, dass** die Dicke der porösen, zweiten Schicht der ersten Elektrode zwischen 15 und 100 µm liegt.

19. Verfahren nach einem der vorhergehenden Ansprüche, **dadurch gekennzeichnet, dass** der Klebstoff, wenn er einmal getrocknet ist, ein poröser Film ist, mit einer Dicke, die zwischen 5 und 20 µm liegt.

20. Verfahren nach einem der vorhergehenden Ansprüche, **dadurch gekennzeichnet, dass** die Dicke der ersten Schicht der ersten Elektrode und die Dicke der porösen Schicht der zweiten Elektrode zwischen 100 und 160 µm liegen.

21. Verfahren nach einem der vorhergehenden Ansprüche, **dadurch gekennzeichnet, dass** die Porosität der porösen Schichten jeder der Elektroden zwischen 35 und 40% liegt.
